# EUROPÄISCHE PATENTANMELDUNG

(11) **EP 2 302 191 A2**
(43) Veröffentlichungstag der Anmeldung: **30.03.2011**
(21) Anmeldenummer: 10171856.7
(22) Anmeldetag: 04.08.2010
(51) Int. Cl.: F02M 37/10, F02M 37/22

(54) **Filtereinrichtung für Flüssigkeiten**

(30) Priorität: 24.09.2009 DE 102009044939
(71) Anmelder: Robert Bosch GmbH, 70442 Stuttgart (DE)
(72) Erfinder: Kustic, Marko, 71672, Marbach (DE); Schuetzbach, Peter, 71696, Moeglingen (DE); Fethke, Martin, 71665, Vaihingen/Enz (DE)

(57) **Zusammenfassung**

Es sind schon Filtereinrichtungen bekannt, mit einem Filter, der einen eingeschlossenen Filterraum aufweist und einen ersten Filter und zumindest einen zweiten Filter umfasst. Der erste Filter und der zweite Filter werden ständig mit Flüssigkeit durchströmt, wobei der zweite Filter wegen seines größeren Abstandes zum Topfboden insbesondere bei geringen Temperaturen weniger leicht mit Paraffin verstopft.

Bei der erfindungsgemäßen Filtereinrichtung wird bei einer zumindest teilweisen Verstopfung des Feinfilters ein Grobfilter zugeschaltet.

Erfindungsgemäß ist vorgesehen, dass der erste Filter (2.1) ein Feinfilter und der zweite Filter (2.2) ein Grobfilter ist, wobei jedem Grobfilter (2.2) ein bewegliches Ventilglied (10) zugeordnet ist, das einen Einlass (11) über den Grobfilter (2.2) in den Filterraum (3) steuert.

## Beschreibung

### Stand der Technik

Die Erfindung geht aus von einer Filtereinrichtung nach der Gattung des Hauptanspruchs.

Es ist schon ein Filter aus der DE 10324957 A1 bekannt, mit einem Filter, der einen eingeschlossenen Filterraum aufweist und einen ersten Filter und zumindest einen zweiten Filter umfasst. Der erste Filter und der zweite Filter werden ständig mit Flüssigkeit durchströmt, wobei der zweite Filter wegen seines größeren Abstandes zum Topfboden insbesondere bei geringen Temperaturen weniger leicht mit Paraffin verstopft. Nachteilig ist, dass beide Filter Grobfilter sind, die permanent parallel durchströmt werden. Partikel, die durch die Filter hindurch gelangen, können die nachgeschalteten Aggregate schädigen.

### Vorteile der Erfindung

Die erfindungsgemäße Filtereinrichtung mit den kennzeichnenden Merkmalen des Hauptanspruchs hat demgegenüber den Vorteil, dass bei einer zumindest teilweisen Verstopfung des Feinfilters ein Grobfilter zugeschaltet wird, indem der erste Filter ein Feinfilter und der zweite Filter ein Grobfilter ist und indem jedem Grobfilter ein Ventilglied zugeordnet ist, das einen Einlass über den Grobfilter in den Filterraum steuert. Die Maschen- bzw. Porenweite des Grobfilters ist größer als die Maschen- bzw. Porenweite des Feinfilters. Durch die erfindungsgemäße Ausführung kann der Feinfilter engmaschiger bzw. engporiger als im Stand der Technik ausgeführt werden, da bei einer zumindest teilweisen Verstopfung des Feinfilters der Grobfilter zugeschaltet wird. Dadurch wird das der Filtereinrichtung nachgeschaltete Förderaggregat besser vor Partikeln geschützt, so dass der Verschleiß am Förderaggregat verringert und damit die Lebensdauer erhöht wird.

Durch die in den Unteransprüchen aufgeführten Maßnahmen sind vorteilhafte Weiterbildungen und Verbesserungen der im Hauptanspruch angegebenen Filtereinrichtung möglich.

Besonders vorteilhaft ist, wenn das Ventilglied von einer Ventilfeder in Richtung des Grobfilters gedrückt wird, da das Ventilglied auf diese Weise abhängig vom Kräftegleichgewicht zwischen der Ventilfeder und dem Druck im Filterraum gesteuert wird.

Weiterhin vorteilhaft ist, wenn die Ventilfeder derart ausgelegt ist, dass der Einlass ab einem vorbestimmten Unterdruck im Filterraum öffnet. Auf diese Weise wird der Grobfilter erst ab einem vorbestimmten Unterdruck im Filterraum zugeschaltet, der auf ein zumindest teilweises Verstopfen des Filters schließen lässt.

Sehr vorteilhaft ist es, wenn das Ventilglied mit einem Ventilsitz zusammenwirkt. Der Ventilsitz kann an einer dem Filterraum zugewandten Innenseite eines den Feinfilter und den Grobfilter abstützenden Filtergehäuses ausgeführt sein. Der Grobfilter ist durch das Ventilglied vorteilhafterweise dicht verschließbar, da der Grobfilter auf diese Weise nur ab einem vorbestimmten Unterdruck im Filterraum durchströmbar ist.

Auch vorteilhaft ist, wenn ein in den Filterraum hineinragender Auslasskanal vorgesehen ist, an dessen Umfang zumindest eine Führung zur Lagerung jedes Ventilglieds vorgesehen ist. Der Auslasskanal kann durch das Filtergehäuse oder durch einen in den Filterraum hineinragenden Eingangsstutzen des Förderaggregates gebildet sein.

Desweiteren vorteilhaft ist, wenn das Ventilglied einen mit dem Ventilsitz zusammenwirkenden Dichtabschnitt aufweist, der mit einem in der Führung beweglich gelagerten Führungskolben verbunden ist.

### Zeichnung

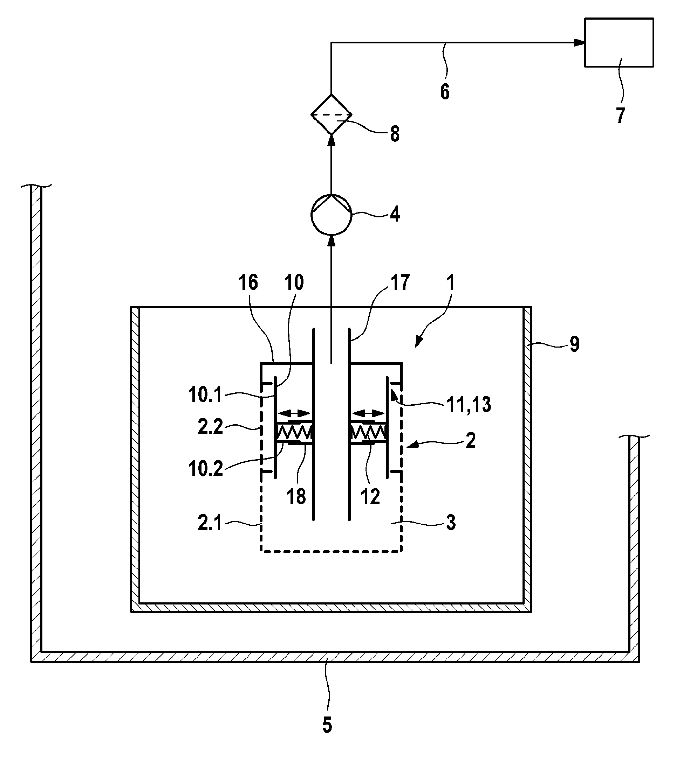

Ein Ausführungsbeispiel der Erfindung ist in der Zeichnung vereinfacht dargestellt und in der nachfolgenden Beschreibung näher erläutert.

### Beschreibung des Ausführungsbeispiels

Die Zeichnung zeigt im Schnitt eine vereinfacht dargestellte Filtereinrichtung, die gemäß dem Ausführungsbeispiel an einer Vorrichtung zum Fördern von Kraftstoff vorgesehen ist, aber selbstverständlich auch in anderen Anwendungen zum Einsatz kommen kann.

Die Filtereinrichtung 1 weist einen Filter 2 auf, der beispielsweise ein Vorfilter ist, einen geschlossenen Filterraum 3 aufweist und einen ersten Filter 2.1 und einen zweiten Filter 2.2 umfasst. Der Vorfilter 2 ist beispielsweise einem Förderaggregat 4 vorgeschaltet, um die angesaugte Flüssigkeit des Förderaggregates 4 vorzufiltern.
Das Förderaggregat 4 kann eine Kraftstoffförderpumpe sein, die Kraftstoff aus einem Tank 5 eines Fahrzeugs über den Vorfilter 2 ansaugt und über eine Druckleitung 6 einer Brennkraftmaschine 7 zuführt. In der Druckleitung 6 kann ein Hauptfilter 8 vorgesehen sein. Die Filtereinrichtung 1, das Förderaggregat 4 und der Hauptfilter 8 können in einem sogenannten Kraftstofffördermodul integriert sein, das einen Speichertopf 9 aufweist, aus dem das Förderaggregat 4 Kraftstoff ansaugt.

Der Kraftstoff hat bei niedrigen Temperaturen, insbesondere im Winter, eine höhere Viskosität, was zu einer Verringerung der Ansaugleistung des Förderaggregates 4 führt. Auch eine Verschmutzung des Filters 2 führt zu einer geringeren Ansaugleistung des Förderaggregates 4. Eine Mindestansaugleistung des Förderaggregates 4 darf jedoch nicht unterschritten werden, wodurch im Stand der Technik die Maschen- bzw. Porenweite des Filters 2 zu kleineren Maschen- bzw. Porenweiten hin begrenzt wird.

Erfindungsgemäß ist daher vorgesehen, dass der erste Filter 2.1 ein Feinfilter und der zweite Filter 2.2 ein Grobfilter ist, wobei jedem Grobfilter 2.2 ein bewegliches Ventilglied 10 0 zugeordnet ist, das einen Einlass 11 über den Grobfilter 2.2 in den Filterraum 3 steuert. Die Maschen- bzw. Porenweite des Grobfilters 2.2 ist größer als die Maschen- bzw. Porenweite des Feinfilters 2.1. Wenn das Förderaggregat 4 die Mindestansaugleistung überschreitet, ist der Einlass 11 vom Ventilglied 4 verschlossen, so dass nur der Feinfilter 2.1 durchströmt wird. Bei einer Unterschreitung der Ansaugleistung baut sich im Filterraum 3 ein Unterdruck auf, der das Ventilglied 4 derart verstellt, dass der Einlass 11 über den Grobfilter 2.2 in den Filterraum 3 geöffnet ist und neben dem Feinfilter 2.1 auch der Grobfilter 2.2 durchströmt wird. Durch diese erfindungsgemäße Ausführung erfolgt unter normalen Betriebsbedingungen (normale Betriebstemperatur und/oder geringer Schmutzanteil in der Flüssigkeit) eine feinere Filtration als im Stand der Technik. Es wird der Verschleiß innerhalb des Förderaggregates 4 verringert, so dass dessen Lebensdauer erhöht wird. Darüber hinaus werden durch die feinere Filtration sogenannte Null-Kilometer-Ausfälle vermieden, da die bei der ersten Inbetriebnahme des Fahrzeugs auftretende vergleichsweise hohe Partikelkonzentration effektiv verringert wird. Nur in vorbestimmten Betriebsbedingungen, die durch eine hohe Viskosität der Flüssigkeit und/oder durch ein zumindest teilweises Verstopfen durch Partikel gekennzeichnet sind, wird der Grobfilter geöffnet und eine gröbere Filtration zugelassen. Dadurch wird die Mindestansaugleistung des Förderaggregates 4 wieder gewährleistet.

Das Ventilglied 10 wird von einer Ventilfeder 12 in Richtung des Grobfilters 2.2 gedrückt. Die Ventilfeder 10 ist derart ausgelegt, dass der Einlass 11 über den Grobfilter 2.2 in den Filterraum 3 ab einem vorbestimmten Unterdruck im Filterraum 3 öffnet.

Der Einlass 11 weist einen Ventilsitz 13 auf, der mit dem Ventilglied 10 zusammenwirkt.

Die beiden Filter 2.1,2.2 werden an ihrer Innenseite von einem Filtergehäuse 16 abgestützt, das den Filterraum 3 formstabil erhält. Einer der Filter 2.1, 2.2 oder beide Filter 2.1,2.2 könnten aber auch selbst formstabil sein und ohne Abstützung durch das Filtergehäuse 16 auskommen, beispielweise indem die Filter 2.1, 2.2 mittels Spritzguss hergestellt sind.
Der Ventilsitz 13 ist an einer dem Filterraum 3 zugewandten Innenseite des Filtergehäuses 16 ausgebildet.
In den Filterraum 3 ragt ein Auslasskanal 17 hinein, an dem zumindest eine Führung 18 zur beweglichen Lagerung des Ventilgliedes 10 vorgesehen ist. Das Ventilglied 10 weist einen mit dem Ventilsitz 13 zusammenwirkenden Dichtabschnitt 10.1 aufweist, der mit einem in der Führung 18 beweglich gelagerten Führungskolben 10.2 verbunden ist.

Der Ventilsitz 13 kann auch entfallen und das Ventilglied 10 stattdessen bei geschlossenem Grobfilter 2.2 unmittelbar am Grobfilter 2.2 anliegen und diesen abdecken.

## Patentansprüche

1. Filtereinrichtung für Flüssigkeiten mit einem Filter (2), der einen eingeschlossenen Filterraum (3) aufweist und einen ersten Filter (2.1) und zumindest einen zweiten Filter (2.2) umfasst, **dadurch gekennzeichnet, dass** der erste Filter (2.1) ein Feinfilter und der zweite Filter (2.2) ein Grobfilter ist, wobei jedem Grobfilter (2.2) ein bewegliches Ventilglied (10) zugeordnet ist, das einen Einlass (11) über den Grobfilter (2.2) in den Filterraum (3) steuert.

2. Einrichtung nach Anspruch 1, **dadurch gekennzeichnet, dass** das Ventilglied (10) von einer Ventilfeder (12) in Richtung des Grobfilters (2.2) gedrückt wird.

3. Einrichtung nach Anspruch 2, **dadurch gekennzeichnet, dass** die Ventilfeder (12) derart ausgelegt ist, dass der Einlass (11) ab einem vorbestimmten Unterdruck im Filterraum (3) öffnet.

4. Einrichtung nach einem der vorhergehenden Ansprüche, **dadurch gekennzeichnet, dass** die Maschen- bzw. Porenweite des Grobfilters (2.2) größer ist als die Maschenweite des Feinfilters (2.1).

5. Einrichtung nach einem der vorhergehenden Ansprüche, **dadurch gekennzeichnet, dass** der Einlass (11) einen Ventilsitz (13) aufweist, der mit dem Ventilglied (10) zusammenwirkt.

6. Einrichtung nach Anspruch 5, **dadurch gekennzeichnet, dass** der Ventilsitz (13) an einer dem Filterraum (3) zugewandten Innenseite eines den Feinfilter (2.1) und den Grobfilter (2.2) abstützenden Filtergehäuses (16) ausgebildet ist.

7. Einrichtung nach einem der vorhergehenden Ansprüche, **dadurch gekennzeichnet, dass** ein in den Filterraum (3) hineinragender Auslasskanal (17) vorgesehen ist, an dem zumindest eine Führung (18) zur Lagerung des Ventilgliedes (10) vorgesehen ist.

8. Einrichtung nach Anspruch 7, **dadurch gekennzeichnet, dass** das Ventilglied (10) einen mit dem Ventilsitz (13) zusammenwirkenden Dichtabschnitt (10.1) aufweist, der mit einem in der Führung (18) beweglich gelagerten Führungskolben (10.2) verbunden ist.

9. Vorrichtung zum Fördern von Kraftstoff mit einem Filter nach einem der vorhergehenden Ansprüche.
